# EUROPÄISCHE PATENTANMELDUNG

(11) **EP 4 659 840 A1**
(43) Veröffentlichungstag der Anmeldung: **10.12.2025**
(21) Anmeldenummer: 25180923.2
(22) Anmeldetag: 05.06.2025
(51) Int. Cl.: B01D 53/04, B01D 53/047

(54) **SORPTIONSMODUL ZUR ABTRENNUNG VON KOHLENSTOFFDIOXID AUS DER UMGEBUNGSLUFT**

(30) Priorität: 05.06.2024 DE 102024115685
(71) Anmelder: VOLKSWAGEN AG, 38440 Wolfsburg (DE)
(72) Erfinder: Zlatkov, Branislav, 38104 Braunschweig (DE); Block, Gerald, 38165 Lehre (DE); Marceta Kaninski, Milica, 11000 Belgrad (RS); Nikolic, Vladimir, 11000 Belgrad (RS); Mudrinic, Mihajlo, 11070 Belgrad (RS)
(74) Vertreter: Gulde & Partner

(57) **Zusammenfassung**

Die Erfindung betrifft ein Sorptionsmodul (100, 200, 300) zur Abtrennung von Kohlenstoffdioxid aus der Umgebungsluft.

Es ist vorgesehen, dass ein erfindungsgemäßes Sorptionsmodul (100, 200, 300) zur Abtrennung von Kohlenstoffdioxid aus der Umgebungsluft einen Prozessraum (40) umfasst. Der Prozessraum (40) umfasst einen Mantel (20) der den Prozessraum (40) umschließt. Zudem umfasst das Sorptionsmodul (100, 200, 300) einen Strömungserzeuger (50) zur Förderung von Umgebungsluft durch den Prozessraum (40). Im Prozessraum (40) sind eine Vielzahl von Sorptionselementen (60) angeordnet, wobei jedes Sorptionselement ein Sorptionsmittel (62) zur Adsorption von Kohlenstoffdioxid aus der Umgebungsluft und ein Mittel zum Fixieren des Sorptionsmittels (62) umfasst. Darüber hinaus umfasst das Sorptionsmodul (100, 200, 300) mindestens ein regelbares Heizelement (70) zur Aufheizung des Sorptionsmittels (62) auf eine Desorptionstemperatur oder eine Regenerationstemperatur. Der Mantel (20) weist eine Vielzahl von Auflagerahmen (22) auf, die den Prozessraum (40) in Raumabschnitte unterteilt. Jeder Auflagerahmen (22) schließt mit der Innenfläche des Mantels (201) umlaufend ab und weist mindestens eine Öffnung auf, welche benachbarte Raumabschnitte verbindet. Je eines aus der Vielzahl von Sorptionselementen (60) liegt auf einem der Auflagerahmen (22) umlaufend auf und deckt die mindestens eine Öffnung des Auflagerahmens (26) ab.

## Beschreibung

Die Erfindung betrifft ein Sorptionsmodul zur Abtrennung von Kohlenstoffdioxid aus der Umgebungsluft gemäß dem Oberbegriff des unabhängigen Patentanspruchs.

Zur Reduzierung der Kohlenstoffdioxidemissionen in der Umgebungsluft und zur Erreichung der Klimaneutralität müssen nicht nur die Kohlenstoffdioxidemissionen verringert werden, sondern auch nicht vermeidbare Kohlenstoffdioxidemissionen entsprechend kompensiert werden. Eine Möglichkeit, diese Kohlenstoffdioxidemissionen zu kompensieren, stellt ein Abscheiden von Kohlenstoffdioxid aus der Umgebungsluft dar. Ein solches Verfahren wird auch als Direct-Air Capture-Verfahren (DAC-Verfahren) bezeichnet und ist geeignet, den Anteil an Kohlenstoffdioxid in der Atmosphäre zu reduzieren.

Aus dem Stand der Technik sind Sorptionsmodule sowie Verfahren zum Abscheiden von Kohlenstoffdioxid aus der Umgebungsluft bekannt. Diese Verfahren umfassen typischerweise einen zyklischen Prozess unter Anwendung einer Kombination aus Druck- und/oder Temperaturwechseln. Dabei wird in der Atmosphärenluft befindliches Kohlenstoffdioxid in einem ersten Prozessschritt durch ein Sorptionselement geleitet und mittels eines geeigneten Sorptionsmittel (Sorbens) gebunden. Das in dem Sorptionsmittel gebundene Kohlenstoffdioxid kann in einem zweiten Prozessschritt wieder freigesetzt werden. Durch die Entwicklung von geeigneten Sorptionsmitteln sowie deren technischer Umsetzung in entsprechenden Sorptionselementen und Sorptionsmodulen soll eine effiziente und energetisch effektive Abscheidung von Kohlenstoffdioxid ermöglicht werden, zum Beispiel, durch die optimierte Ausgestaltung der in den Sorptionsmodulen befindlichen Sorptionselemente. Eine grundlegende Herausforderung besteht weiterhin in der effektiven Führung des Luftstroms durch den Reaktionsraum des Sorptionsmoduls.

Der Erfindung liegt nun die Aufgabe zugrunde, ein Sorptionsmodul bereitzustellen, das eine effiziente und energetisch effektive Abscheidung von Kohlenstoffdioxid ermöglicht.

Die Aufgabe wird durch ein erfindungsgemäßes Sorptionsmodul zur Abtrennung von Kohlenstoffdioxid aus der Umgebungsluft gelöst.

Das erfindungsgemäße Sorptionsmodul zur Abtrennung von Kohlenstoffdioxid aus der Umgebungsluft umfasst einen Prozessraum. Der Prozessraum umfasst einen Mantel der den Prozessraum (seitlich) umschließt. Zudem umfasst das Sorptionsmodul einen Strömungserzeuger zur Förderung von Umgebungsluft durch den Prozessraum. Im Prozessraum sind eine Vielzahl von (luftdurchlässigen) Sorptionselementen (in einer Strömungsrichtung aufeinanderfolgend) angeordnet, wobei jedes Sorptionselement ein Sorptionsmittel zur Adsorption von Kohlenstoffdioxid aus der Umgebungsluft und ein Mittel zum Fixieren des Sorptionsmittels umfasst. Darüber hinaus umfasst das Sorptionsmodul mindestens ein regelbares Heizelement zur Aufheizung des Sorptionsmittels auf eine Desorptionstemperatur oder eine Regenerationstemperatur. Der Mantel weist eine Vielzahl von Auflagerahmen auf, die den Prozessraum in Raumabschnitte unterteilen. Jeder der Auflagerahmen schließt mit der Innenfläche des Mantels (umlaufend) ab und weist mindestens eine Öffnung auf, welche benachbarte Raumabschnitte verbindet. Je eines aus der Vielzahl von Sorptionselementen liegt (direkt) auf einem der Auflagerahmen umlaufend auf und deckt die mindestens eine Öffnung des Auflagerahmens (vollständig) ab.

Die erfindungsgemäße Ausgestaltung des Mantels, insbesondere die Vielzahl von Auflagerahmen und darauf aufliegenden Sorptionselemente ermöglichen eine Verlängerung der Verweildauer der Umgebungsluft im Prozessraum und somit eine längere Adsorptionsphase des Kohlenstoffdioxids aus der Umgebungsluft am Sorptionsmittel.

Das Sorptionsmodul kann ferner eine Basis und eine Abdeckung umfassen, die zusammen mit dem Mantel den Prozessraum bilden. Die Basis bildet die Unterseite des Prozessraums und schließt mit dem unteren Ende des Mantels gasdicht ab. Die Abdeckung bildet die Oberseite des Prozessraums und schließt mit dem oberen Ende des Mantels gasdicht ab. Die Basis weist vorzugsweise eine gasdicht verschließbare Einlassöffnung auf, durch welche Umgebungsluft in den Prozessraum eingeleitet werden kann. Die Abdeckung weißt vorzugsweise eine gasdicht verschließbare Auslassöffnung auf, durch welche Kohlenstoffdioxid ärmere Luft aus dem Prozessraum abgeleitet werden kann.

In vorteilhafter Ausführungsform der Erfindung kann mindestens einer der Auflagerahmen eine einzige konzentrische Öffnung aufweisen. Besonders bevorzugt können alle Auflagerahmen je eine einzige konzentrische Öffnung aufweisen.

In besonders vorteilhafter Ausführungsform der Erfindung ist vorgesehen, dass mindestens einer der Auflagerahmen als eine (kreisförmige) Lochscheibe mit einer konzentrischen (zum Beispiel kreisförmigen) Öffnung oder als eine (kreisförmige) Lochscheibe mit mehreren Öffnungen ausgestaltet ist. Besonders bevorzugt können alle Auflagerahmen als (kreisförmige) Lochscheiben mit je einer konzentrischen Öffnung oder als (kreisförmige) Lochscheiben mit mehreren Öffnungen ausgestaltet sein.

In vorteilhafter Ausführungsform der Erfindung können die Auflagerahmen in gleichmäßigem Abstand zueinander auf der Innenfläche des Mantels angeordnet sein und den Prozessraum in gleich große Raumabschnitte unterteilen. Die Auflagerahmen können auch alternativ in einem abnehmenden Abstand zueinander auf der Innenfläche des Mantels angeordnet sein können und den Prozessraum in abnehmend große Raumabschnitte unterteilen, wobei der Abstand vorzugsweise in Strömungsrichtung abnimmt.

Zwischen der Unterseite eines Auflagerahmens und eines direkt darunter angeordneten Sorptionselements ist vorzugsweise ein Spalt vorgesehen. Dieser Spalt ermöglicht, dass sich ein Sorptionselement bei temporär zu starker Anströmung vom Auflagerahmen lösen kann. Optional kann der Spalt zudem in einem Desorptionsschritt oder Regenerationsschritt einen Strömungspfad zur gasdicht verschließbaren Entnahmeöffnung bilden, welcher den freigesetzten Gasen einen geringeren Strömungswiderstand bietet.

In vorteilhafter Ausführungsform der Erfindung ist vorgesehen, dass der Prozessraum (im Wesentlichen) zylindrisch oder prismatisch ausgestaltet ist. Besonders vorteilhaft, im Hinblick auf den Betrieb bei vermindertem Druck, ist ein zylindrisch ausgestalteter Prozessraum mit kreisrunder oder ellipsoider Ausgestaltung der Basis und der Abdeckung. Vorteilhafte Ausführungen umfassen jedoch auch prismatisch ausgestaltete Prozessräume mit beispielsweise vier-, fünf-, sechs-, sieben- oder acht-eckiger Ausgestaltung der Basis und der Abdeckung.

Der Strömungserzeuger zur Förderung von Umgebungsluft durch den Prozessraum des Sorptionsmoduls kann beispielsweise als ein Ventilator ausgestaltet sein. Der Strömungserzeuger kann dem Prozessraum in Strömungsrichtung vorgeordnet oder nachgeordnet sein. Entsprechend kann der Strömungserzeuger dazu ausgelegt sein, Umgebungsluft in den Prozessraum einzuströmen oder Kohlenstoffdioxid arme Luft aus dem Prozessraum heraus zu fördern.

In vorteilhafter Ausführungsform der Erfindung ist vorgesehen, dass der Prozessraum (im Wesentlichen) zylindrisch oder prismatisch ausgestaltet ist. Besonders vorteilhaft, im Hinblick auf den Betrieb bei vermindertem Druck, ist ein zylindrisch ausgestalteter Prozessraum mit kreisrunder oder ellipsoider Ausgestaltung der Basis und der Abdeckung. Vorteilhafte Ausführungen umfassen jedoch auch prismatisch ausgestaltete Prozessräume mit beispielsweise vier-, fünf-, sechs-, sieben- oder acht-eckiger Ausgestaltung der Basis und der Abdeckung.

Die gasdicht verschließbare Einlassöffnung der Basis und die gasdicht verschließbare Auslassöffnung der Abdeckung können als (unabhängig voneinander) steuerbare Armaturen ausgestaltet sein. Steuerbare Armaturen umfassen Ventile, Absperrklappen und Absperrschieber.

Unter einem Sorptionsmittel ist in diesem Zusammenhang ein Material zu verstehen, welches dazu geeignet ist, durch chemische oder physikalische Prozesse ein zu adsorbierendes Gas, insbesondere Kohlenstoffdioxid, reversibel an sich zu binden und bei einer Änderung der Prozessparameter, wie beispielsweise eine Temperaturerhöhung und/oder Druckminderung, wiederfreizusetzen. Ein Sorptionsmittel, das dazu geeignet ist, durch physikalische Prozesse ein zu adsorbierendes Gas, insbesondere Kohlenstoffdioxid, reversibel an sich zu binden, wird vorliegend als Physisorbent bezeichnet. Ein Sorptionsmittel, das dazu geeignet ist, durch chemische Prozesse ein zu adsorbierendes Gas, insbesondere Kohlenstoffdioxid, reversibel an sich zu binden, wird vorliegend als Chemisorbent bezeichnet.

In vorteilhafter Ausführungsform der Erfindung ist vorgesehen, dass das Sorptionsmittel ein Physisorbent sein kann. Besonders bevorzugt kann der Physisorbent ein Zeolith umfassen. Das Zeolith ist beispielsweise aus mindestens einem der Zeolithe: Zeolith A (Na₁₂[(AlO₂)₁₂(SiO₂)₁₂] · 27 H₂O), Zeolith X (Na₈₆[(AlO₂)₈₆(SiO₂)₁₀₆] · 264 H₂O), Zeolith Y (Na₅₆[(AlO₂)₅₆(SiO₂)₁₃₆] · 250 H₂O), Zeolith L (K₉[(AlO₂)₉(SiO₂)₂₇] · 22 H₂O), ZSM 5 (Na_{0,3}H_{3,8}[(AlO₂)_{4,1}(SiO₂)_{91,9}], und ZSM 11 (Na_{0,1}H_{1,7}[(AlO₂)_{1,8}(SiO₂)_{94,2}]) ausgewählt.

Ferner können Polymere mit Stickstoff-haltiger funktioneller Gruppe, zum Beispiel mit einer Amino-Gruppe oder einer Imin-Gruppe als Sorptionsmittel genutzt werden. Beispiele für Polymere als Physisorbent umfassen: Polyethylenimin (PEI), Polyallylamin (PAA), Tetraethylenpentamin (TEPA), Pentaethylenhexamin (PEHA), Polyethylenimin-modifiziertes Silika(gel). Besonders bevorzugt als Sorptionsmittel ist ein (makroporöses) Divinylbenzol-vernetztes Polymer mit primären Aminogruppen. Ein Beispiel für ein (makroporöses) Divinylbenzol-vernetztes Polymer mit primären Aminogruppen ist Lewatit^{®} VP OC 1065.

Alternativ kann das Sorptionsmittel ein Chemisorbent sein. Der Chemisorbent ist vorzugsweise ausgewählt aus der Gruppe umfassend Kaliumcarbonat (K₂CO₃), Natriumnitrat (NaNO₃), Aluminiumoxid (Al₂O₃), Zirconiumdioxid (ZrO₂), Titandioxid (TiO₂), Mangandioxid (MnO₂), Zinkoxid (ZnO) und binäre eutektische Gemische, bestehend aus Kaliumnitrat (KNO₃) und Lithiumnitrat (LiNO₃).

In weiterer vorteilhafter Ausführungsform der Erfindung ist vorgesehen, dass die Form des Sorptionsmittels aus mindestens einer Form umfassend Granulat, Platte, Rundstab und Kantstab ausgewählt ist. Vorzugsweise können die Partikel des Granulats einen durchschnittlichen Durchmesser (D50) von 0.3 mm bis 8.0 mm aufweisen (bestimmt durch Siebung). Rundstäbe mit einem kreisförmigen Querschnitt können vorzugsweise einen Durchmesser von 0.3 mm bis 8.0 mm aufweisen. Kantstäbe mit quadratischem Querschnitt können vorzugsweise ein Seitenmaß von 0.3 mm bis 5.0 mm aufweisen. Das Sorptionsmittel ist vorzugsweise in die vorstehend genannten Formen extrudiert (gepresst).

In vorteilhafter Ausführungsform der Erfindung ist vorgesehen, dass das Mittel zum Fixieren des Sorptionsmittels als Tasche und/oder als Träger ausgestaltet ist. Die Tasche beinhaltet (zum Beispiel umhüllt) das Sorptionsmittel und ist gas- und feuchtigkeitsdurchlässig (zum Beispiel luftdurchlässig). Beispiele für Taschen umfassen Membrantaschen, Netztaschen und Fließtaschen. Der Träger umfasst ein poröses Matrixmaterial und/oder einen metallischen Träger. Das poröse Matrixmaterial ist vorzugsweise mit dem Sorptionsmittel als Komposit in (kreis-)zylindrische Scheiben oder prismatische Platten ausgeformt. Das poröse Matrixmaterial ist gas- und feuchtigkeitsdurchlässig (zum Beispiel luftdurchlässig). Ein Beispiel für das poröse Matrixmaterial sind Polymerschwämme. Der metallische Träger kann als Strukturträger dienen, an dem beiderseitig Sorbentmaterialien angebracht sind. Dies kann insbesondere durch eine Beschichtung oder Ummantelung des Trägers mit dem Sorbentmaterial erfolgen. Der metallische Träger kann auch als regelbares Heizelement dienen.

Unter einer Desorptionstemperatur ist im Zusammenhang dieser Offenbarung eine Temperatur zu verstehen, bei welcher das chemisch oder physisch in dem Sorptionsmittel gebundene Kohlenstoffdioxid wieder freigesetzt wird. Unter einer Regenerationstemperatur ist in diesem Zusammenhang eine Temperatur zu verstehen, bei welcher das Sorptionsmittel wieder in den Ausgangszustand überführt wird, insbesondere bei der im Sorptionsmittel gebundenes Wasser (ursprünglich aus Luftfeuchte) wieder freigesetzt wird.

In weiterer vorteilhafter Ausführungsform der Erfindung ist vorgesehen, dass das mindestens eine regelbare (elektrische) Heizelement als Heizspirale oder als Heizmatte ausgestaltet ist. Vorzugsweise kann das regelbare (elektrische) Heizelement in das Sorptionselement integriert (zum Beispiel eingebettet) sein. Insbesondere kann das regelbare (elektrische) Heizelement als metallische Träger ausgestaltet sein und als Mittel zum Fixieren des Sorptionsmittels dienen.

Besonders bevorzugt, kann das Sorptionsmodul eine Vielzahl regelbarer (elektrischer) Heizelemente umfassen, wobei je eines aus der Vielzahl der Heizelemente in je eines der Sorptionselemente integriert (zum Beispiel eingebettet) ist und vorzugsweise als Heizspirale oder als Heizmatte ausgestaltet ist.

Die Integration des regelbaren Heizelements, zum Beispiel einer Heizspirale oder einer Heizmatte, in das Sorptionselement hat den vorteilhaften Effekt, dass eine direktere Wärmeübertragung auf das Sorptionsmittel erfolgt. Energieverluste durch zusätzliche Wärmeübergänge, wie beispielsweise vom Heizelement auf den Mantel, dann auf die Umgebungsluft im Prozessraum und schließlich auf das Sorptionsmittel, können somit reduziert oder vermieden werden. Alternativ oder in Kombination mit der vorstehend beschriebenen Ausführungsform kann das regelbare Heizelement als Heizlüfter ausgestaltet sein und dem Prozessraum in Strömungsrichtung vorgeordnet sein. In dieser Ausführungsform kann heiße Luft mittels des Heizlüfters in den Prozessraum eingeströmt werden und nach der Kontaktierung und Regeneration des Sorptionsmittels über die Entnahmeöffnung abgeleitet werden.

In weiterer vorteilhafter Ausführungsform der Erfindung ist vorgesehen, dass das Sorptionsmodul ferner ein regelbares Mittel zur Erzeugung eines Unterdrucks umfasst und mindestens eine gasdicht verschließbare Entnahmeöffnung umfasst, die im Mantel angeordnet ist und das regelbare Mittel zur Erzeugung eines Unterdrucks mit dem Prozessraum verbindet.

Das regelbare Mittel zur Erzeugung eines Unterdrucks im Prozessraum kann beispielsweise eine Vakuumpumpe und/oder eine Kondensationspumpe sein. Eine Kondensationspumpe ist zum Beispiel eine Kühlfalle. Eine Vakuumpumpe umfasst zum Beispiel eine Membranpumpe oder eine Drehschieberpumpe.

In Fortführung der zuvor beschriebenen Ausführungsform kann der Mantel einen Innenmantel und einen den Innenmantel umschließenden Außenmantel umfassen. In dieser Ausführungsform schließt jeder Auflagerahmen mit der Innenfläche des Innenmantels ab. Der Innenmantel weißt ferner mindestens einen Schacht auf, der sich über die Höhe H des Innenmantels erstreckt und innenseitig über die gesamte Höhe H des Schachts zum Prozessraum offen ist. Der Außenmantel weist zudem mindestens eine gasdicht verschließbare Entnahmeöffnung auf, die in einer Öffnungsstellung innenseitig über jeweils einen Schacht des Innenmantels mit dem Prozessraum verbunden ist und außenseitig mit dem regelbaren Mittel zur Erzeugung eines Unterdrucks verbunden ist. Die Schächte können innenseitig zum Prozessraum gasdicht verschließbar ausgebildet sein, beispielsweise durch mindestens eine regelbare Absperrklappe die den Schacht innenseitig schließt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein aus dem Stand der Technik bekanntes Sorptionsmodul zur Abtrennung von Kohlenstoffdioxid aus der Umgebungsluft;
- Figur 2: eine schematische Querschnittsdarstellung einer Ausführungsform des erfindungsgemäßen Sorptionsmoduls zur Abtrennung von Kohlenstoffdioxid aus der Umgebungsluft;
- Figur 3: eine schematische Darstellung eines exemplarischen Sorptionselements des erfindungsgemäßen Sorptionsmoduls;
- Figur 4: eine schematische Querschnittsdarstellung einer weiteren Ausführungsform des erfindungsgemäßen Sorptionsmoduls zur Abtrennung von Kohlenstoffdioxid aus der Umgebungsluft;
- Figur 5: eine schematische Querschnittsdarstellung einer weiteren Ausführungsform des erfindungsgemäßen Sorptionsmoduls zur Abtrennung von Kohlenstoffdioxid aus der Umgebungsluft;
- Figur 6: eine schematische Draufsicht der Ausführungsform des in Figur 5 dargestellten Sorptionsmoduls zur Abtrennung von Kohlenstoffdioxid aus der Umgebungsluft;

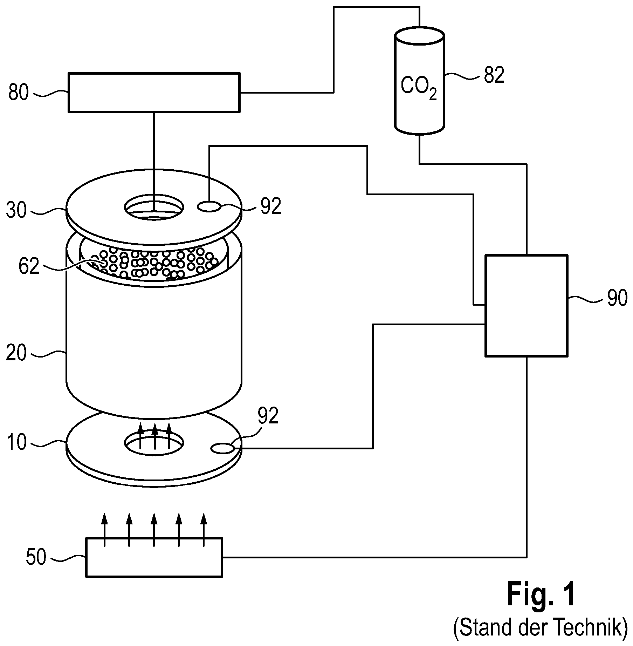

Figur 1 zeigt ein aus dem Stand der Technik bekanntes Sorptionsmodul zur Abtrennung von Kohlenstoffdioxid aus der Umgebungsluft in einer schematischen Darstellung. Das Sorptionsmodul umfasst eine Basis 10, einen Mantel 20 und eine Abdeckung 30, die einen aufrecht ausgerichteten kreiszylindrischen Prozessraum 40 bilden. Ein Strömungserzeuger 50 fördert Umgebungsluft durch eine Einlassöffnung der Basis in den Prozessraum 40. Im Prozessraum 40 ist ein Sorptionsmittel 62 eingebracht, das von der eingeströmten Umgebungsluft kontaktiert wird und Kohlenstoffdioxid absorbiert. Die Kohlenstoffdioxid ärmere Luft kann über eine Auslassöffnung in der Abdeckung 30 aus dem Prozessraum ausströmen. Für die Desorption des Kohlenstoffdioxids umfasst das Sorptionsmodul typischerweise ein regelbares Mittel zur Erzeugung eines Unterdrucks 80 im Prozessraum 40 und ein Heizelement zur Aufheizung des Sorptionsmittels 62 im Prozessraum auf die entsprechende Desorptionstemperatur (Heizelement nicht gezeigt). Das im Desorptionsschritt freigesetzte Kohlenstoffdioxid kann in einem geeigneten CO₂-Speicher 82 zwischengelagert oder in anderer Weise verwertet werden. Eine Steuereinheit 90 ist dazu ausgelegt mittels Sensorsystemen 92, umfassend Temperatursensor, Drucksensor, Luftfeuchtesensor und Durchflusssensor, entsprechende Parameter zu erfassen und den Strömungserzeuger 50, das Mittel zur Erzeugung eines Unterdrucks 80 und das Heizelement zu steuern.

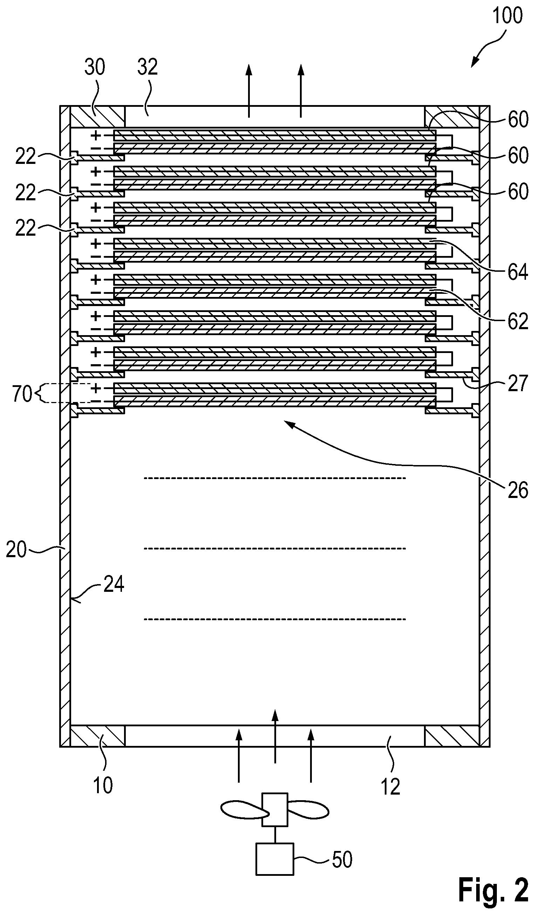

Figur 2 zeigt eine erfindungsgemäße Ausführungsform des Sorptionsmoduls 100 zur Abtrennung von Kohlenstoffdioxid aus der Umgebungsluft in einer schematischen Querschnittsdarstellung. Das Sorptionsmodul umfasst eine Basis 10, einen Mantel 20 und eine Abdeckung 30 die gemeinsam einen Prozessraum 40 ausbilden. Der Mantel 20 umschließt den Prozessraum 40 längsseitig. Die Basis 10 und die Abdeckung 30 schließen den Mantel zur Unterseite, beziehungsweise zur Oberseite ab, sodass Basis 10, Mantel 20 und Abdeckung 30 einen im wesentlichen kreiszylindrischen Hohlzylinder ausformen, der senkrecht (vertikal) ausgerichtet ist. Die Basis 10 weist eine gasdicht verschließbare Einlassöffnung 12 auf, durch die Umgebungsluft in den Prozessraum eingeströmt werden kann. Die Einlassöffnung 12 umfasst ferner eine steuerbare Armatur (nicht gezeigt), welche die Einlassöffnung gasdicht abschließt oder öffnet. Die Abdeckung 30 weist eine gasdicht verschließbare Auslassöffnung 32 auf, durch die Kohlenstoffdioxid arme Luft aus dem Prozessraum abgelassen werden kann. Die Auslassöffnung 32 umfasst ferner eine steuerbare Armatur (nicht gezeigt), welche die Auslassöffnung gasdicht abschließt oder öffnet.

In der in Figur 2 illustrierten Ausführungsform ist der Strömungserzeuger 50 der Einlassöffnung in Strömungsrichtung vorgeordnet und ist dazu ausgelegt, Umgebungsluft in den Prozessraum 40 einzuleiten. Der Strömungserzeuger 50 kann jedoch auch der Auslassöffnung 32 in Strömungsrichtung nachgeordnet sein und dazu ausgelegt sein, Luft aus dem Prozessraum 40 anzusaugen.

Erfindungsgemäß weist der Mantel 20 eine Vielzahl von Auflagerahmen 22 auf, die den Prozessraum 40 in Raumabschnitte unterteilen. Jeder Auflagerahmen 22 schließt mit der Innenfläche 24 des Mantels umlaufend ab und weist mindestens eine Öffnung 26 auf, welche unmittelbar benachbarte Raumabschnitte verbindet. Der Auflagerahmen 22 kann beispielsweise als kreisförmige Lochscheibe mit konzentrischer kreisförmiger Öffnung 26 ausgestaltet sein, deren äußere Kante (äußerer Kreisumfang) mit der Innenseite 24 des Mantels (gasdicht) abschließt.

Je eines aus der Vielzahl von Sorptionselementen 60 liegt auf einem der Auflagerahmen 22 umlaufend auf und deckt die mindestens eine Öffnung 26 des Auflagerahmens 22 vollständig ab. Das Sorptionselement 60 kann lose auf dem Auflagerahmen 22 aufliegen, um beispielsweise ab einem festgelegten Höchstwert der Strömungsgeschwindigkeit sich vom Auflagerahmen zu lösen und einen Rückstau der Umgebungsluft zu vermeiden. Eingeströmte Umgebungsluft wird demnach im Normalbetrieb durch die Öffnung 26 des Auflagerahmens in das Sorptionselement 60 geleitet. Der Auflagerahmen 22 reduziert oder verhindert somit ein seitliches Ausweichen des Luftstroms um das Sorptionselement herum und verlängert die Verweilzeit der Umgebungsluft in jedem Raumabschnitt.

Wie in Figur 2 gezeigt, sind im Prozessraum 40 eine Vielzahl von Sorptionselementen 60 in Strömungsrichtung (schwarzer Pfeil) aufeinanderfolgend angeordnet. Jedes Sorptionselement 60 umfasst das Sorptionsmittel 62 zur Adsorption von Kohlenstoffdioxid aus der eingeleiteten Umgebungsluft und ein Mittel zum Fixieren des Sorptionsmittels 64. Im Adsorptionsschritt des DAC-Verfahrens durchströmt die eingeleitete Umgebungsluft das Sorptionselement 60, beziehungsweise das Mittel zum Fixieren des Sorptionsmittels 64, und kontaktiert das Sorptionsmittel 62, bevor die Kohlenstoffdioxid-arme Luft durch die Auslassöffnung 32 abgeleitet wird.

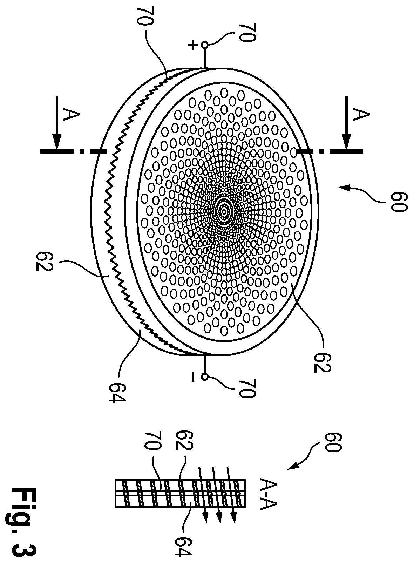

In Figur 3 ist eine Ausführungsform des Mittels zum Fixieren des Sorptionsmittels 64 näher illustriert. Das Mittel zum Fixieren des Sorptionsmittels 64 ist beispielshaft als luftdurchlässige Membrantasche ausgestaltet, die das Sorptionsmittel 62 beinhaltet. In dieser Ausführungsform ist zudem in das Sorptionselement 60 ein regelbares elektrisches Heizelement 70 integriert. Beispielsweise kann das regelbare elektrische Heizelement 70, wie gezeigt, als elektrische Heizspirale ausgestaltet sein und innerhalb der Membrantasche 64 mit dem Sorptionsmittel 62 zumindest teilweise in direktem Kontakt stehen. Durch eine derartige Integration des regelbaren elektrischen Heizelements in das Sorptionselement 60, zum Beispiel durch Anordnung innerhalb einer Membrantasche 64, kann die Übertragung von Wärmeenergie auf das Sorptionsmittel 62 besonders effizient verwirklicht werden.

Das regelbare elektrische Heizelement 70 kann ferner an eine Stromquelle angeschlossen und mit diversen AC und/oder DC Pulsprofilen angesteuert werden. Im praktischen Sinne würde es bedeuten, dass eine pulsierende Stromzuleitung neben dem Wärmeenergieeintrag eine zusätzliche elektromagnetische Strahlung erzeugen kann, welche die Desorption von Kohlenstoffdioxid aus dem Sorptionsmittel unterstützen kann.

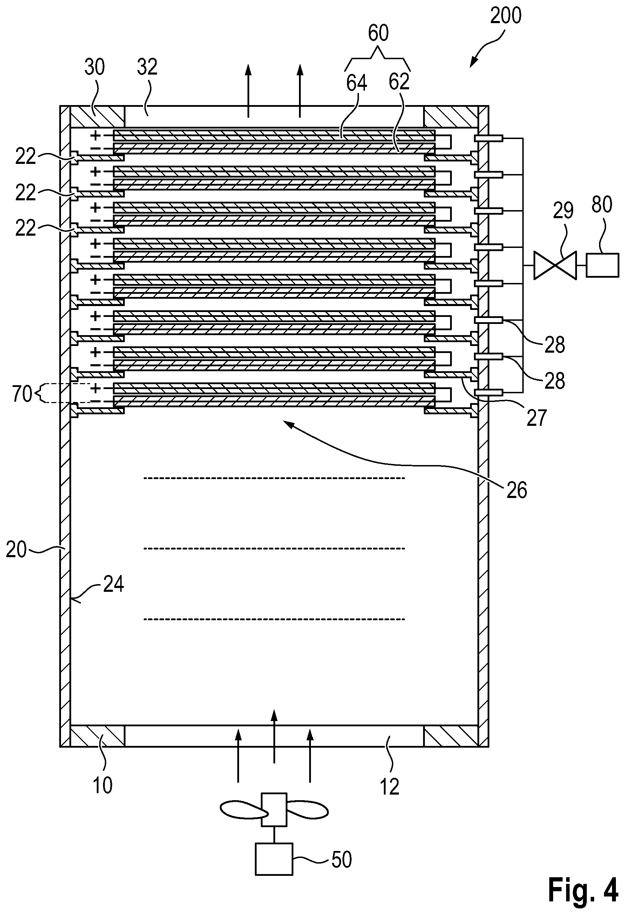

Figur 4 zeigt eine weitere bevorzugte Ausführungsform des Sorptionsmoduls. Das in Figur 4 gezeigte Sorptionsmodul 200 unterscheidet sich von dem zuvor beschriebenen Sorptionsmodul 100 darin, dass der Mantel 20 eine Vielzahl gasdicht verschließbarer Entnahmeöffnungen 28 aufweist. Die gasdicht verschließbaren Entnahmeöffnungen 28 können, wie gezeigt, als Durchgangsbohrung durch den Mantel ausgeformt sein und zwischen zwei benachbarten Auflagerahmen 22 im Mantel angeordnet sein. Die gasdicht verschließbaren Entnahmeöffnungen 28 sind zudem außenseitig mit dem regelbaren Mittel zur Erzeugung eines Unterdrucks 80 (zum Beispiel mit einer Vakuumpumpe) verbunden. Zwischen den jeweiligen Entnahmeöffnungen 28 und der Vakuumpumpe können mehrere oder (wie in Figur 4 gezeigt) ein Mittel zum Schließen der Entnahmeöffnung 29 (zum Beispiel eine regelbare Armatur) zwischengeordnet sein, um den Gasfluss von der Entnahmeöffnung zur Vakuumpumpe zu regeln. Das in einem Desorptionsschritt des DAC-Verfahrens freigesetzte Kohlenstoffdioxid kann in einem CO₂-Speicher gelagert werden, welcher mit der Entnahmeöffnung verbunden ist. Das in einem Regenerationsschritt des DAC-Verfahrens freigesetzte Wasser kann über einen Wasserauslass verworfen werden, welcher mit der Entnahmeöffnung verbunden ist.

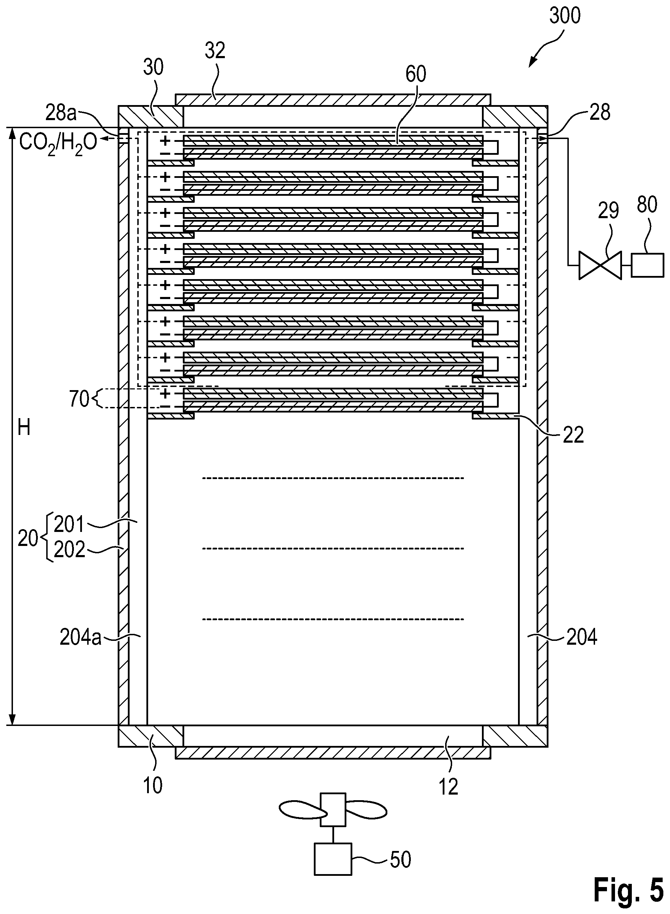

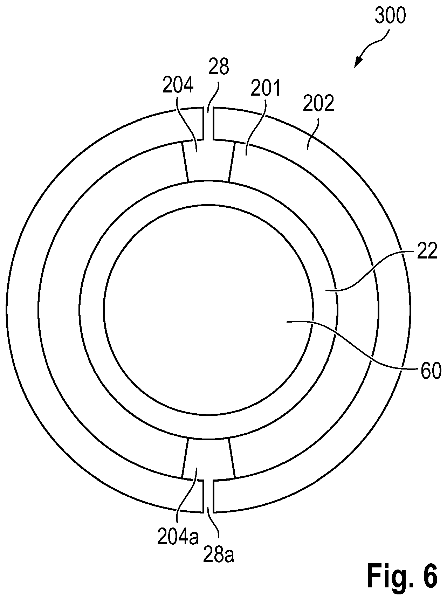

Figur 5 zeigt eine weitere bevorzugte Ausführungsform des Sorptionsmoduls. Das in Figur 5 gezeigte Sorptionsmodul 300 unterscheidet sich von den zuvor beschriebenen Sorptionsmodulen 100 und 200 darin, dass der Mantel 20 einen Innenmantel 201 und einen Außenmantel 202 umfasst, und der Außenmantel 202 den Innenmantel 201 (gasdicht) umschließt. Der Innenmantel 201 weist in der illustrierten Ausführungsform zwei gegenüberliegende Schächte 204 und 204a auf. Wie in Figur 6 in einer Draufsicht des Sorptionsmoduls 300 gezeigt, sind der Innenmantel 201 und der Außenmantel 202 in direktem Kontakt zueinander angeordnet und die Vielzahl an Auflagerahmen 22 schließen jeweils mit der Innenfläche des Innenmantels 202 ab. Mit anderen Worten sind die Auflagerahmen 22 innerhalb des Prozessraums angeordnet und sind mit ihrer Außenkante mit der Innenfläche des Innenmantels 202 verbunden, sodass sie einen innenliegenden Rahmen bilden. Die Auflagerahmen weisen jeweils mindestens eine Öffnung auf, welche unmittelbar benachbarte Raumabschnitte verbindet. Der Auflagerahmen 22 kann wie gezeigt als kreisförmige Lochscheibe mit konzentrischer kreisförmiger Öffnung ausgestaltet sein, deren äußere Kante (äußerer Kreisumfang) mit der Innenseite des Innenmantels gasdicht abschließt (verbunden ist). Je ein Sorptionselement 60 deckt die Öffnung je eines Auflagerahmens 22 vollständig ab, sodass eingeströmte Umgebungsluft durch die Sorptionselemente 60 hindurch geleitet wird. Der Innenmantel 202 kann einteilig, mehrteilig oder, wie in Figur 5 und 6 gezeigt, zweiteilig ausgestaltet sein. Beide Schächte erstrecken sich jeweils über die gesamte Höhe H des Innenmantels und sind innenseitig über die gesamte Höhe des Schachts zum Prozessraum offen, sodass im Desorptionsschritt oder im Regenerationsschritt ein Gas vom Prozessraum in den Schacht einströmen kann. Die Schächte 204 und 204a sind ferner innenseitig zum Prozessraum 40 gasdicht verschließbar, zum Beispiel durch mindestens eine regelbare Absperrklappe die den Schacht innenseitig schließt (nicht gezeigt), sodass in einem Adsorptionsschritt des DAC-Verfahrens keine Umgebungsluft über die Schächte geleitet wird.

Der Außenmantel 202 weist zwei gasdicht verschließbare Entnahmeöffnungen 28 und 28a auf, die innenseitig über jeweils einen der zwei Schächte 204 und 204a des Innenmantels mit dem Prozessraum 40 verbunden sind. Die gasdicht verschließbaren Entnahmeöffnungen 28 können, wie gezeigt, als Durchgangsbohrung durch den Außenmantel 202 ausgeformt sein und in der oberen Hälfte des Außenmantels angeordnet sein. Die gasdicht verschließbaren Entnahmeöffnungen 28 und 28a sind zudem außenseitig mit dem regelbaren Mittel zur Erzeugung eines Unterdrucks 80 (zum Beispiel mit einer Vakuumpumpe) verbunden. Zwischen den jeweiligen Entnahmeöffnungen 28 und 28a und der Vakuumpumpe kann mindestens ein Mittel zum Schließen der Entnahmeöffnung 29 (zum Beispiel eine regelbare Armatur) zwischengeordnet sein, um den Gasfluss von der Entnahmeöffnungen zur Vakuumpumpe 80 zu regeln. Freigesetztes Kohlenstoffdioxid kann in einem CO₂-Speicher gelagert werden, welcher mit der Entnahmeöffnung 28 verbunden ist. Freigesetztes Wasser kann über einen Wasserauslass verworfen werden, welcher mit der Entnahmeöffnung verbunden ist.

Alle Ausführungsformen können optional eine Steuereinheit 90 umfassen, die dazu ausgelegt ist mittels eines Sensorsystems, umfassend mindestens einen Sensor aus Temperatursensor, Drucksensor, Luftfeuchtesensor und Durchflusssensor, entsprechende Parameter im Sorptionsmodul zu erfassen und dazu eingerichtet sein kann den Strömungserzeuger, das Mittel zur Erzeugung eines Unterdrucks, das regelbare Heizelement, das regelbare Mittel zum Schließen der Entnahmeöffnung sowie gasdicht verschließbare Einlassöffnung der Basis und die gasdicht verschließbare Auslassöffnung der Abdeckung unabhängig voneinander zu steuern.

### Bezugszeichenliste

- 100,200,300: Sorptionsmodul
- 10: Basis
- 12: gasdicht verschließbare Einlassöffnung
- 20: Mantel
- 201: Innenmantel
- 202: Außenmantel
- 204, 204a: Schacht
- 22: Auflagerahmen
- 24: Innenfläche des Mantels
- 26: Öffnung des Auflagerahmens
- 27: Unterseite des Auflagerahmens
- 28, 28a: gasdicht verschließbare Entnahmeöffnung
- 29: regelbares Mittel zum Schließen der Entnahmeöffnung (Armatur, Absperrventil, Absperrklappe)
- 30: Abdeckung
- 32: gasdicht verschließbare Auslassöffnung
- 40: Prozessraum
- 50: Strömungserzeuger
- 60: Sorptionselement
- 62: Sorptionsmittel
- 64: Mittel zum Fixieren des Sorptionsmittels
- 70: regelbares Heizelement
- 80: regelbares Mittel zur Erzeugung eines Unterdrucks (Vakuumpumpe, Kondensationspumpe)
- 82: CO₂-Speicher
- 84: Wasserauslass
- 90: Steuereinheit
- 92: Sensorsystem (Temperatursensor, Drucksensor, Luftfeuchtesensor, Durchflusssensor)

## Patentansprüche

1. Sorptionsmodul (100, 200, 300) zur Abtrennung von Kohlenstoffdioxid aus der Umgebungsluft, umfassend:
einen Prozessraum (40), umfassend einen Mantel (20), der den Prozessraum (40) umschließt;
einen Strömungserzeuger (50) zur Förderung von Umgebungsluft durch den Prozessraum (40);
eine Vielzahl von Sorptionselementen (60), wobei jedes Sorptionselement (60) ein Sorptionsmittel (62) zur Adsorption von Kohlenstoffdioxid aus der Umgebungsluft und ein Mittel (64) zum Fixieren des Sorptionsmittels (62) umfasst; und
mindestens ein regelbares Heizelement (70) zur Aufheizung des Sorptionsmittels (62) auf eine Desorptionstemperatur oder eine Regenerationstemperatur;
**dadurch gekennzeichnet, dass**
der Mantel (20) eine Vielzahl von Auflagerahmen (22) umfasst, die den Prozessraum (40) in Raumabschnitte unterteilen,
jeder Auflagerahmen (22) mit der Innenfläche (24) des Mantels abschließt und mindestens eine Öffnung (26) umfasst, die benachbarte Raumabschnitte verbindet; und
je eines aus der Vielzahl von Sorptionselementen (60) auf einem der Auflagerahmen (22) umlaufend aufliegt und die mindestens eine Öffnung (26) des Auflagerahmens abdeckt.

2. Sorptionsmodul (100, 200, 300) nach Anspruch 1, wobei mindestens einer der Auflagerahmen (22) eine einzige konzentrische Öffnung (26) aufweist.

3. Sorptionsmodul (100, 200, 300) nach Anspruch 1, wobei mindestens einer der Auflagerahmen (22) als eine Lochscheibe mit einer konzentrischen Öffnung (26) oder als eine Lochscheibe mit mehreren Öffnungen ausgestaltet ist.

4. Sorptionsmodul (100, 200, 300) nach einem der vorstehenden Ansprüche, wobei die Auflagerahmen (22) in gleichmäßigem Abstand zueinander auf der Innenfläche (24) des Mantels angeordnet sind und den Prozessraum (40) in gleich große Raumabschnitte unterteilen.

5. Sorptionsmodul (100, 200, 300) nach einem der vorstehenden Ansprüche, wobei zwischen einer Unterseite (27) eines Auflagerahmens und eines direkt darunter angeordneten Sorptionselements (60) ein Spalt ist.

6. Sorptionsmodul (100, 200, 300) nach einem der vorstehenden Ansprüche, ferner umfassend eine Vielzahl regelbarer Heizelemente (70), wobei je eines aus der Vielzahl der Heizelemente (70) in je eines der Sorptionselemente (60) integriert ist.

7. Sorptionsmodul (100, 200, 300) nach einem der vorstehenden Ansprüche, wobei das Sorptionsmittel (62) ein Physisorbent ist, und der Physisorbent vorzugsweise ein Zeolith umfasst.

8. Sorptionsmodul (100, 200, 300) nach einem der vorstehenden Ansprüche, wobei das Mittel zum Fixieren des Sorptionsmittels (64) als Tasche und/oder Träger ausgestaltet ist.

9. Sorptionsmodul (200, 300) nach einem der vorstehenden Ansprüche, ferner umfassend ein regelbares Mittel zur Erzeugung eines Unterdrucks (80); und
mindestens eine gasdicht verschließbare Entnahmeöffnung (28) die im Mantel (20) angeordnet ist und das regelbare Mittel zur Erzeugung eines Unterdrucks (80) mit dem Prozessraum (40) verbindet.

10. Sorptionsmodul (200, 300) nach Anspruch 9, wobei der Mantel (20) einen Innenmantel (201) und einen den Innenmantel umschließenden Außenmantel (202) umfasst;
jeder Auflagerahmen (22) mit der Innenfläche des Innenmantels (201) abschließt;
der Innenmantel (201) mindestens einen Schacht (206) aufweist, der sich über die Höhe (H) des Innenmantels (201) erstreckt und innenseitig über die gesamte Höhe des Schachts (204) zum Prozessraum (40) offen ist; und
der Außenmantel (202) mindestens eine gasdicht verschließbare Entnahmeöffnung (28, 28a) aufweist, die in einer Öffnungsstellung innenseitig über jeweils einen Schacht (204) des Innenmantels mit dem Prozessraum (40) verbunden ist und außenseitig mit dem regelbaren Mittel zur Erzeugung eines Unterdrucks (80) verbunden ist.
